# EUROPÄISCHE PATENTSCHRIFT

(11) **EP 2 090 800 B1**
(45) Veröffentlichungstag und Bekanntmachung des Hinweises auf die Patenterteilung: **26.10.2011**
(21) Anmeldenummer: 09001509.0
(22) Anmeldetag: 04.02.2009
(51) Int. Cl.: F16D 65/14, F16D 67/02, F16D 55/00, B30B 15/10, B30B 15/12, F16D 67/04

(54) **Kupplungs-Bremskombination**
Coupling brake combination
Combinaison de freinage pour embrayage

(30) Priorität: 15.02.2008 DE 102008009516
(43) Veröffentlichungstag der Anmeldung: 19.08.2009
(73) Patentinhaber: Herion Systemtechnik GmbH, 71263 Weil der Stadt-Merklingen (DE)
(72) Erfinder: Grötzinger, Lothar, 72172 Sulz / Neckar (DE)
(74) Vertreter: Sacht-Gorny, Gudrun

(56) Entgegenhaltungen:
- EP-A- 1 715 212
- DE-A1- 2 711 505
- DE-A1- 3 013 382
- DE-A1- 3 424 540
- DE-A1- 10 135 663
- DE-B1- 2 549 714
- DE-B1- 2 938 359
- DE-B1- 2 938 394

## Beschreibung

Die vorliegende Erfindung betrifft die Verwendung einer zweiten Bremse in einer Kupplungs-Bremskombination mit wenigstens einer Kupplung und mit wenigstens einer Bremse. Kupplungs-Bremskombinationen wie sie z.B. aus DE 3013382 bekanntsind, werden bei einer Vielzahl von Bearbeitungsmaschinen eingesetzt, beispielsweise bei Pressen, Stanzmaschinen oder dergleichen. Diese Bearbeitungsmaschinen weisen wenigstens ein beispielsweise durch einen Stößel bewegbares Werkzeug auf, mit dem ein Werkstück bearbeitbar ist. Über die Kupplung ist ein zur Bewegung des Werkzeugs sich bewegendes Drehteil, das über den Maschinenantrieb angetrieben wird, einkoppelbar. Die Bremseinrichtung der Kupplungs-Bremskombination ist zur Stillsetzung der Bewegung des Drehteils vorgesehen. Zur Umsteuerung zwischen Kupplung und Bremse wird üblicherweise ein Hauptkolben eingesetzt, der zwischen der Bremslage einerseits und der Kupplungslage andererseits seine Anpressdruckwirkung ausübt.

Für Reparaturarbeiten an der Presse oder andere notwendige Eingriffe in deren Werkzeugraum muss sichergestellt sein, dass das bewegliche Werkzeugteil, z.B. der Stößel, hochgehalten wird, um eine Verletzungsgefahr für das Bedienpersonal auszuschließen. Üblicherweise sind hierfür formschlüssige Hochhalteeinrichtungen vorgesehen. Beispielsweise beschreibt die EP 0 314 975 A1 eine Presse mit einem Stößel, bei welcher mehrere Sperrstangen im oberen Bereich des auf- und abfahrenden Stößels vorgesehen sind, die mit ortsfesten Sperrriegeln im Kopfstück der Presse zusammenwirken. Problematisch hierbei ist, dass die Verriegelungseinrichtung sehr stabil und aufwendig gebaut sein muss, da sie gegebenenfalls die gesamte nach unten gerichtete Last des Pressenstößels aufnehmen bzw. kompensieren muss. Zudem ermöglicht diese Anordnung nicht eine stufenlose Verriegelung des Stößels, da die Höhenlage der Sperrstange durch die seitlich eingreifenden Sperrriegel vorgegeben ist.

Die DE 199 10 965 A1 schlägt demgegenüber eine Verriegelungseinrichtung als Hochhalteeinrichtung vor, die eine der Antriebswelle zugeordnete Außenverzahnung und eine am Pressengestell gelagerte Innenverzahnung aufweist. Durch Ineinandergreifen der Verzahnungen ist ein Festhalten des Stößels unabhängig von der jeweiligen Werkzeughöhe möglich.

Die DE 101 35 663 A1 schlägt eine Hochhalteeinrichtung vor, die an die Bremseinrichtung angebaut ist. Die Hochhalteeinrichtung ist gezielt steuerbar ausgebildet und mit dem Drehteil formschlüssig kuppelbar, um die Drehbewegung des Drehteils zu sperren. Die formschlüssige Halterung des Drehteils bzw. Drehantriebs wird durch einen Zahnkranz und Gegenzahnkranz gewährleistet.

Der Nachteil einer formschlüssigen Hochhalteeinrichtung liegt darin, dass zusätzlich zur eigentlichen Betätigungsfunktion der Hochhalteeinrichtung ein Stellglied betätigt werden muss, um den Formschluss zu bewirken. Dieses Stellglied muss zum Einen eigens angesteuert werden und zum Anderen für die erforderliche Sicherheit der Hochhalteeinrichtung an seiner Position entsprechend überwacht bzw. kontrolliert werden. Diese zusätzlichen Elemente erfordern weiteren apparativen und steuerungstechnischen Aufwand, der sich insbesondere auf die Kosten einer derartigen Hochhalteeinrichtung negativ auswirkt.

Die Erfindung stellt sich daher die Aufgabe, eine Hochhalteeinrichtung bereitzustellen, die stufenlos greift und allen Sicherheitsanforderungen gerecht wird. Zudem soll die Hochhalteeinrichtung konstruktiv vorteilhaft gestaltet sein und eine ökonomische Bauweise ermöglichen.

Diese Aufgabe wird durch die Verwendung einer zweiten Bremse in einer Kupplungs-Bremskombination gelöst, wie sie im Anspruch 1 beschrieben ist. Bevorzugte weitere merkmale sind in den abhängigen Ansprüchen dargestellt.

Die Erfindung umfasst die Verwendung einer integrierten zweiten Bremse mit Scheiben, die zum Reibschluss vorgesehen sind, als Hochhalteeinrichtung in einer Kupplungs-Bremskombination mit wenigstens einer zur drehbeweglichen Verbindung mit einem Antrieb vorgesehenen Kupplung und mit wenigstens einer ortsfesten Bremse für eine Bearbeitungsmaschine. Bearbeitungsmaschinen, beispielsweise Pressen, Stanzmaschinen oder dergleichen, mit beweglichen Werkzeugteilen erfordern insbesondere aus Sicherheitsgründen eine Hochhalteeinrichtung zum Festhalten des beweglichen Werkzeugteils, um ein gefahrloses Hantieren an der Bearbeitungsmaschine, insbesondere im Werkzeugraum, für Bedienpersonal zu ermöglichen. Weitere Merkmale, Eigenschaften und Vorteile der Verwendung der integrierten zweiten Bremse als Hochhalteeinrichtung worden im folgenden beschrieben.

Die Kupplungs-Bremskombination weist wenigstens eine Kupplung auf, die zur drehbeweglichen Verbindung mit einem Antrieb vorgesehen ist, und wenigstens eine ortsfeste Bremse. Weiterhin umfasst die Kupplungs-Bremskombination wenigstens eine Hochhalteeinrichtung, wobei die Hochhalteeinrichtung in die Kupplungs-Bremskombination integriert ist und Scheiben bzw. Lamellen umfasst, die zum Reibschluss vorgesehen sind. Durch diese in die Kupplungs-Bremskombination integrierte reibschlüssige Hochhalteeinrichtung wird ein Festhalten eines bewegbaren Werkzeugs beispielsweise am oberen Totpunkt der Bewegung des Werkzeugs ermöglicht, wobei das Festhalten des bewegbaren Werkzeugs völlig stufenlos erfolgt und damit unabhängig von der Position des Werkzeugs ist. Die Kupplungs-Bremskombination mit integrierter Hochhalteeinrichtung stellt sicher, dass das bewegbare Werkzeug an einer Bewegung gehindert wird und in der gebremsten Stellung stehen bleibt, so dass ohne Gefahr in den Werkzeugraum einer entsprechenden Bearbeitungsmaschine eingegriffen werden kann. Die Kupplungs-Bremskombination mit integrierter Hochhalteeinrichtung ermöglicht zudem eine sehr kompakte Bauweise der Kupplungs-Bremskombination. Die Kupplungs-Bremskombination ist zur Verwendung in üblichen Bearbeitungsmaschinen geeignet, die wenigstens ein beispielsweise durch einen Stößel bewegbares Werkzeug aufweisen. Bei entsprechenden Bearbeitungsgeräten handelt es sich beispielsweise um Pressen, Stanzmaschinen oder dergleichen.

Bevorzugt ist der wenigstens einen Kupplung und der wenigstens einen Bremse ein Betätigungssystem und der wenigstens einen Hochhalteeinrichtung ein weiteres Betätigungssystem zugeordnet. Insbesondere umfassen diese Betätigungssysteme jeweils wenigstens einen Kolben und wenigstens eine Feder bzw. ein Federpaket. Das Betätigungssystem der Kupplung und der Bremse ermöglicht die Umsteuerung zwischen der Bremslage einerseits und der Kupplungslage andererseits bzw. umgekehrt. Dies wird vorzugsweise durch einen ersten Kolben realisiert, der mit einer entsprechenden Feder bzw. einem Federpaket derart vorgespannt ist, dass in der Grund- bzw. Ruhestellung der Kolben seine Anpressdruckwirkung an der Bremslage ausübt. Das Betätigungssystem der Hochhalteeinrichtung umfasst ebenfalls vorzugsweise weinigstens einen Kolben und wenigstens eine Feder bzw. ein Federpaket. In der Grund- bzw. Ruhestellung übt dieses Betätigungssystem bzw. der Kolben durch entsprechende Vorspannung mittels der Feder bzw. des Federpaktes einen Anpressdruck auf die reibschlüssige Hochhalteeinrichtung aus. Vorzugsweise sind für die Hochhalteeinrichtung Reibscheiben bzw. Lamellenpakete vorgesehen, die zusammen mit den Federkräften das Haltemoment bewirken. Auch für die Kupplung und/oder die Bremse sind vorzugsweise Reibscheiben bzw. Lamellenpakete vorgesehen, die bei entsprechendem Anpressdruck durch das Betätigungssystem, insbesondere durch den Kolben, die Kupplungswirkung bzw. die Bremswirkung erzielen.

Mit besonderem Vorteil sind die Betätigungssysteme hydraulisch ansteuerbar, insbesondere werden hierfür übliche hydraulische Systeme eingesetzt. Die Betätigungssysteme werden vorzugsweise durch entsprechende Medienkanäle mit unter Druck stehendem Medium, beispielsweise Hydrauliköl, beaufschlagt.

Die Auslegung der Kupplungs-Bremskombination, insbesondere die Auslegung der verschiedenen Drehmomente für das Kupplungsmoment, das Bremsmoment sowie das Haltemoment der Hochhalteeinrichtung, erfolgt vorzugsweise in Anpassung an die Erfordernisse der jeweiligen Bearbeitungsmaschine.

In besonders bevorzugter Weise ist die Kupplungs-Bremskombination derart ausgelegt, dass es im Betätigungsfall immer zu einer Unterschneidung der Kupplungswirkung und der Hochhalteeinrichtung kommt. Vorzugsweise löst sich vor der Einkupplung zunächst die Hochhalteeinrichtung und danach die Bremse. Erst anschließend schließt sich die Kupplung. Hierdurch werden Störungen oder Beschädigungen der Kupplungs-Bremskombination bzw. der Bearbeitungsmaschine vermieden. Diese Unterschneidung wird insbesondere durch eine entsprechende Auslegung der Kolbenflächen und der Federdrücke erreicht.

In einer besonders bevorzugten Ausführungsform sind die Betätigungssysteme der Kupplung und der Bremse einerseits und der Hochhalteeinrichtung andererseits hydraulisch miteinander verbunden. Dies ist vorzugsweise dadurch realisiert, dass zwischen dem Druckkolbenraum des Kolbens der Kupplung und der Bremse ein Kanal bzw. eine Bohrung zum Druckkolbenraum des Kolbens der Hochhalteeinrichtung vorgesehen ist, Ober den das hydraulische Medium in beiden Räumen in Verbindung steht, so dass entsprechender Druck parallel auf beide Kolben ausgeübt wird. Diese Gestaltung der Kupplungs-Bremskombination hat den Vorteil, dass bei Ansteuerung des Betätigungssystems für die Kupplung und Bremse automatisch auch die Hochhalteeinrichtung angesteuert wird. Vorzugsweise sind sowohl Bremse als auch Hochhalteeinrichtung immer gleichzeitig aktiviert, indem ein entsprechender Anpressdruck auf die Reibscheiben bzw. Lamellenpakete der Bremse und der Hochhalteeinrichtung durch die Kolben ausgeübt wird.

Durch entsprechende Anordnung der Kolben und Vorspannung durch die Federn bzw. Federpakete sind in der Grund- bzw. Ruhestellung Bremse und Hochhalteeinrichtung aktiviert. Sobald die Kupplung angesteuert wird, wird ein hydraulischer Druck auf die Kolbenflächen ausgeübt. Der Druck erfolgt zunächst auf das Betätigungssystem bzw. die Kolbenfläche, die zwischen Kupplung und Bremse hin und her schaltet. Durch die vorzugsweise erfindungsgemäß vorgesehene Bohrung zum weiteren Kolbenraum wirkt der Druck parallel auf die Fläche des zweiten Kolbens, der die Hochhalteeinrichtung bedient. Der Druck auf den ersten Kolben bewirkt ein Zusammendrücken der Reibscheiben bzw. des Lamellenpaketes der Kupplung, so dass eine Einkupplung stattfindet und das bewegbare Werkzeug der Bearbeitungsmaschine in Bewegung versetzt wird und beispielsweise herunterfährt. Gleichzeitig bzw. bevorzugt kurz davor löst sich der Anpressdruck auf das Lamellenpaket der Bremse, so dass die Bremse belüftet und freigegeben wird. Parallel hierzu bzw. bevorzugt kurz davor löst sich der Kolbendruck auf die Reibscheiben bzw. das Lamellenpaket der Hochhalteeinrichtung, so dass auch die Hochhalteeinrichtung belüftet und freigegeben wird. Bei Abschalten der Kupplung baut sich der hydraulische Druck ab, so dass erneut durch die Kolben in Verbindung mit den jeweiligen Federkräften ein Anpressdruck auf das Lamellenpaket der Bremse und auf die Reibscheiben bzw. das Lamellenpaket der Hochhalteeinrichtung ausgeübt wird. Die Hochhalteeinrichtung der Kupplungs-Bremskombination ist daher nach jedem normalen Arbeitshub, beispielsweise wenn sich das bewegbare Werkzeug am oberen Totpunkt befindet, aktiv und in Funktion. Auch bei jedem Druckabfall des hydraulischen Systems tritt die Wirkung der Hochhalteeinrichtung ein.

Als besonderer Vorteil im Vergleich mit herkömmlichen formschlüssigen Hochhalteeinrichtungen ist es bei Einsatz der Kupplungs-Bremskombination mit integrierter Hochhalteeinrichtung nicht erforderlich, das Bearbeitungswerkzeug bzw. das bewegbare Werkzeug in eine bestimmte Position bzw. auf eine bestimmte Stufe zu verfahren, damit die Hochhalteeinrichtung ihre Funktion ausüben kann. Die Hochhalteeinrichtung ist bei Stillstand des Bearbeitungswerkzeugs bzw. bei aktivierter Bremse automatisch mitgeschaltet und gewährleistet durch aktives Hochhalten des Bearbeitungswerkzeugs das Festhalten der Bewegung des Bearbeitungswerkzeugs in jeder Position.

Die vorgesehene Hochhalteeinrichtung in der Kupplungs-Bremskombination hat weiterhin den Vorteil, dass sich die Bremswirkung der Bremse verstärkt. Gegebenenfalls kann daher die Bremse in ihrer Leistungsfähigkeit entsprechend geringer ausgelegt werden, so dass die Dimensionierung und damit die Kosten für die Kupplungs-Bremskombination entsprechend niedriger gehalten werden können. Die Integration der Hochhalteeinrichtung in der Kupplungs-Bremskombination, vorzugsweise auch die integrierte Ansteuerung der Hochhalteeinrichtung zusammen mit der Bremse, ermöglicht zudem eine konstruktiv vorteilhafte kompakte Bauweise der Kupplungs-Bremskombination, die sich im Hinblick auf die Kosten und das Raumerfordernis von entsprechend ausgestatteten Bearbeitungsmaschinen sehr vorteilhaft auswirkt.

In einer besonders bevorzugten Ausführungsform sind zwei oder mehr Hochhalteeinrichtungen vorgesehen, die parallel oder in Reihe geschaltet sein können. Hierdurch kann die Sicherheit der Kupplungs-Bremskombination bzw. einer entsprechend ausgestatteten Bearbeitungsmaschine weiter erhöht werden.

In einer besonders bevorzugten Ausführungsform der Kupplungs-Bremskombination ist zur Ansteuerung der Kupplungs-Bremskombination ein Sicherheitsventil vorgesehen, das vorzugsweise elektrisch beaufschlagbar ist. Beispielsweise kann ein übliches Pressensicherheitsventil eingesetzt werden. Bei Aktivierung des Sicherheitsventils, insbesondere bei Bestromung des Ventils, wird die Kupplungs-Bremskombination mit Druck beaufschlagt, so dass sich die Reibscheiben bzw. Lamellenpakete der Hochhalteeinrichtung und der Bremse lösen und durch Anpressdruck des entsprechenden Kolbens die Kupplung aktiviert wird. Bei Abschaltung des Ventils, insbesondere bei Stromlosschaltung des Ventils, baut sich der hydraulische Druck ab, so dass die Kolben durch die entsprechenden Federkräfte einen Anpressdruck sowohl auf das Lamellenpaket der Bremse als auch auf die Reibscheiben bzw. das Lamellenpaket der Hochhalteeinrichtung ausüben. Hierdurch wird die Bremse und die Hochhalteeinrichtung aktiviert und das bewegbare Werkzeug in seiner Bewegung festgesetzt. Bei nicht bestromtem Sicherheitsventil befindet sich daher die Hochhalteeinrichtung immer in Funktion, so dass eine Bedienperson ohne Gefahr im Werkzeugraum beispielsweise zum Auswechseln von Werkzeug oder zur Wartung hantieren kann.

Als weitere Sicherheitsmaßnahme zur Sicherung der Bearbeitungsmaschine, beispielsweise der Presse, kann mit besonderem Vorteil vorgesehen sein, dass beim Hochhalten des Bearbeitungswerkzeugs, beispielsweise am oberen Totpunkt der Bewegungslinie, das Sicherheitsventil nicht bestromt werden kann.

In einer besonders bevorzugten Ausführungsform ist dem Sicherheitsventil wenigstens ein weiteres Ventil zugeordnet. Dieses Ventil kann derart geschaltet sein, dass hierdurch eine weitere Sicherheitsstufe realisiert wird.

In einer besonders bevorzugten Ausführungsform der Kupplungs-Bremskombination ist dem Kolben des Betätigungssystems der Hochhalteeinrichtung ein Bolzen bzw. Stift zugeordnet, der zur Verdrehsicherung vorgesehen ist.

In bevorzugter Weise ist für das Betätigungssystem der Hochhalteeinrichtung eine Überwachung vorgesehen. Insbesondere ist für den Kolben des Betätigungssystems der Hochhalteeinrichtung eine Stellungsüberwachung vorgesehen. Diese Überwachung kann beispielsweise elektronisch erfolgen. Durch die Überwachung kann die Stellung und/oder die Funktionsfähigkeit des Betätigungssystems der Hochhalteeinrichtung überwacht und überprüft werden, so dass hierdurch die Sicherheit weiter erhöht werden kann. Beispielsweise kann bei nicht ordnungsgemäßer Stellung des Kolbens ein entsprechendes Warnsignal ausgegeben werden.

In einer besonders bevorzugten Ausführungsform der Kupplungs-Bremskombination ist für die Kupplung, die Bremse und/oder die Hochhalteeinrichtung eine Kühlung vorgesehen. Die Kühlung erfolgt vorzugsweise durch Beaufschlagung mit entsprechendem Kühlmedium. Beispielsweise sind hierfür geeignete Bohrungen bzw. Kanäle in der Kupplungs-Bremskombination vorgesehen. Mit besonderem Vorteil ist das Kühlemedium ein Kühlfluid, vorzugsweise Kühlöl.

In einer vorteilhaften Ausführungsform der Kupplung-Bremskombination ist sowohl der Bremse als auch der Hochhalteeinrichtung jeweils eine separates Außenteil zugeordnet, das zur Abstützung von Bremse und Hochhalteeinrichtung an einem Gehäuse, insbesondere einem Pressengehäuse oder Pressenlager vorgesehen ist. Diese Ausführungsform hat gegenüber Ausführungsformen, die für Bremse und Hochhalteeinrichtung ein gemeinsames Abstützungselement vorsehen, den Vorteil, dass durch die separaten Außenteile die Funktionssicherheit erhöht werden kann, insbesondere dadurch, dass bei einem Defekt eines der Außenteile das andere Außenteil die Haltefunktion sicherstellen kann.

Weitere Merkmale und Vorteile der Erfindung ergeben sich aus der nachfolgenden Beschreibung der Zeichnung in Verbindung mit den Unteransprüchen. Hierbei können die einzelnen Merkmale jeweils für sich oder in Kombination miteinander verwirklicht sein.

In den Zeichnungen zeigen:
- Fig. 1: ein bevorzugtes Ausführungsbeispiel einer Kupplungs-Bremskombination mit Hochhalteeinrichtung;
- Fig. 2: ein hydraulisches Schema zur Ansteuerung einer Kupplungs-Bremskombination mit Hochhalteeinrich- tung und
- Fig. 3: ein weiteres Ausführungsbeispiel einer Kupplungs-Bremskombination mit Hochhalteeinrichtung.

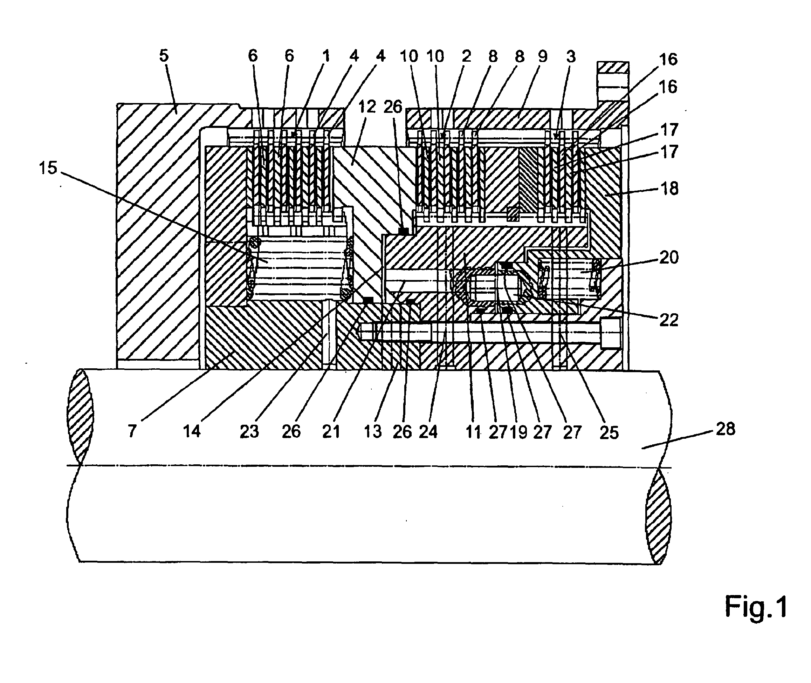

Die in **Figur 1** dargestellte Kupplungs-Bremskombination weist eine Kupplung 1, eine Bremse 2 und eine Hochhalteeinrichtung 3 auf. Die Kupplung 1 umfasst äußere Kupplungslamellen 4, die mit einem äußeren Mitnehmer 5, der beispielsweise an einem Schwungrad (nicht dargestellt) angeordnet ist, verbunden sind. Innere Lamellen 6 sind drehfest mit einem Innenmitnehmer 7 verbunden. Die Bremse 2 umfasst äußere Bremslamellen 8, die mit einem ortsfesten Träger 9 verbunden sind. Der Träger 9 ist beispielsweise an dem Pressengehäuse (nicht dargestellt) befestigt. Die inneren Bremslamellen 10 sind in drehfester Verbindung mit einem Innenmitnehmer 11 verbunden. Zwischen der Kupplung 1 und der Bremse 2 ist ein erster Kolben 12 angeordnet, der durch einen Druckkanal 13, der in den ersten Druckkolbenraum 14 mündet, mit Druck beaufschlagbar ist. Der erste Kolben 12 ist durch wenigstens eine Feder bzw. ein Federpaket 15 vorgespannt, so dass der erste Kolben 12 in seiner Ausgangslage bzw. Grundstellung eine Kraft auf die Bremse 2 bzw. das Bremslamellenpaket ausübt.

Die Hochhalteeinrichtung 3 umfasst äußere Reibscheiben 16, die mit dem ortsfesten Träger 9 verbunden sind. Die inneren Reibscheiben 17 der Hochhalteeinrichtung 3 sind in drehfester Verbindung mit dem Innenmitnehmer 11 verbunden. Der Hochhalteeinrichtung 3 ist ein zweiter Kolben 18 zugeordnet, der durch einen weiteren Druckkolbenraum 19 mit Druck beaufschlagbar ist. Der Kolben 18 ist durch wenigstens eine Feder bzw. ein Federpaket 20 derart vorgespannt, dass der Kolben 18 in seiner Ausgangslage bzw. Grundstellung einen Anpressdruck auf das Reibscheibenpaket der Hochhalteeinrichtung 3 ausübt.

Der Druckkolbenraum 19 steht über einen Medienkanal 21 mit dem ersten Druckkolbenraum 14 in Verbindung. Der weitere Kolben 18 ist vorzugsweise mit einem Stift bzw. Bolzen 22 als Verdrehsicherung ausgestattet. Die Lamellenpakete bzw. Reibscheiben der Kupplungs-Bremskombination können über Kanäle 23, 24 und 25 mit Kühlmittel beaufschlagt werden, beispielsweise mit Kühlöl. Die Kolbenräume 14 und 19 werden durch geeignete Dichtungen 26 und 27 abgedichtet.

Die Kupplungs-Bremskombination ist rotationssymetrisch um eine zentrale Welle 28 angeordnet, wobei die verschiedenen Lamellenpakete bzw. Reibscheiben kreisförmig bzw. umlaufend angeordnet sind. Zur Vorspannung der Kolben sind im Querschnitt vorzugsweise mehrere Federpakete vorgesehen. Die inneren Mitnehmer 7, 11 stehen beispielsweise mit einem beweglichen Werkzeug einer Bearbeitungsmaschine, insbesondere einem Stößel, in an sich bekannter Weise in Verbindung.

Die Auslegung der Kupplungs-Bremskombination erfolgt vorzugsweise in Anpassung an die jeweilige Bearbeitungsmaschine. Beispielsweise kann die Kupplungs-Bremskombination/für ein übertragbares Kupplungsmoment von cirka 50.000 bis cirka 120.000 Nm, für ein schaltbares Bremsmoment von cirka 10.000 bis cirka 60.000 Nm und für ein Haltemoment der Hochhalteeinrichtung von cirka 5.000 bis cirka 15.000 Nm ausgelegt sein. Ein bevorzugtes Beispiel für eine entsprechende Auslegung ist ein übertragbares Kupplungsmoment von cirka 90.000 Nm, für ein schaltbares Bremsmoment von cirka 28.000 Nm und für ein Haltemoment der Hochhalteeinrichtung von cirka 10.000 Nm.

In der Grundstellung bzw. Ruheposition oder Ausgangsposition der Kupplungs-Bremskombination ist der Kolben 12 durch das Federpaket 15 derart vorgespannt, dass er sich im Anpressdruck auf das Lamellenpaket der Bremse 2 befindet Durch Vorspannung durch das Federpaket 20 befindet sich der weitere Kolben 18 im Anpressdruck auf das Reibscheibenpaket bzw. Lamellenpaket der Hochhalteeinrichtung 3. In diesem Zustand befindet sich die Kupplungs-Bremskombination in gebremsten Zustand, bei gleichzeitigem Festhalten des bewegbaren Werkzeugteils bzw. des Bearbeitungswerkzeugs durch die aktivierte Hochhalteeinrichtung 3. Das Bearbeitungswerkzeug (nicht dargestellt), insbesondere der Stößel, kann sich beispielsweise am oberen Totpunkt seiner Bewegungslinie befinden. Die Hochhalteeinrichtung ist jedoch nicht auf diese oder eine andere bestimmte Position des bewegbaren Werkzeugs festgelegt. Vielmehr ermöglicht die Hochhalteeinrichtung ein Festhalten des bewegbaren Werkzeugs in jeder Position. Durch Beaufschlagung mit hydraulischem Druck über den Druckkanal 13 wird der Druckkolbenraum 14 unter Druck gesetzt. Hierdurch wird das Lamellenpaket der Bremse 2 freigegeben. Gleichzeitig wird Ober den Verbindungskanal 21 und den Druckkolbenraum 19 Druck auf die Kolbenfläche des Kolbens 18 ausgeübt. Dieser Druck komprimiert die Feder bzw. das Federpaket 20 und gibt die Reibscheiben bzw. das Lamellenpaket der Hochhalteeinrichtung 3 frei. Der Kolben 12 drückt gegen das Lamellenpaket der Kupplung 1 und komprimiert das Federpaket 15, so dass eingekuppelt wird und über die inneren Mitnehmer 7, 11 das bewegbare Werkzeugteil in Bewegung versetzt wird. Durch die Druckbeaufschlagung des hydraulischen Systems werden also sowohl die Bremse 2 als auch die Hochhalteeinrichtung 3 belüftet und freigegeben. Die Kupplung 1 wird eingeschaltet, so dass das bewegbare Werkzeug über die inneren Mitnehmer 7, 11 bewegt wird.

Ohne Druck des hydraulischen Systems, beispielsweise bei nicht bestromtem Sicherheitsventil, werden der Kolben 12 und der Kolben 18 durch die Federkräfte der Federpakete 15 und 20 wieder zurück in die Ausgangsposition gebracht, so dass das Lamellenpaket der Bremse 2 und die Bremsscheiben bzw. das Lamellenpaket der Hochhalteeinrichtung 3 zusammengedrückt werden und sich die Kupplungs-Bremskombination bzw. die Bearbeitungsmaschine in gebremster Stellung bei Festhalten des bewegbaren Werkzeugs befindet. Bei aktiver Bremse befindet sich also auch immer die Hochhalteeinrichtung in Funktion. Das Festhalten des bewegbaren Werkzeugteils durch die Hochhalteeinrichtung ist somit stufenlos und unabhängig von der Position des bewegbaren Werkzeugteils möglich.

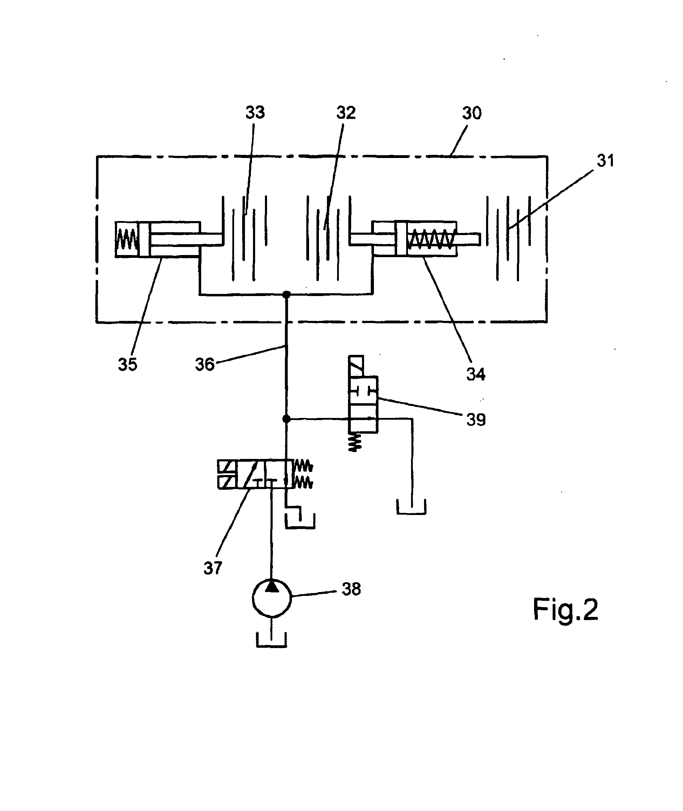

Das in **Figur 2** gezeigte hydraulische Schema zur Ansteuerung einer Kupplungs-Bremskombination umfasst die Kupplungs-Bremskombination 30 mit den Lamellenpaketen der Kupplung 31, der Bremse 32 und der Hochhalteeinrichtung 33. Der Kupplung 31 und der Bremse 32 ist ein Betätigungssystem 34 und der Hochhalteeinrichtung 33 ist ein Betätigungssystem 35 zugeordnet. Die Betätigungssysteme 34 und 35 sind mittels entsprechender Leitungen 36 hydraulisch ansteuerbar. Die erfindungsgemäße Kupplungs-Bremskombination 30 ist in der Ausgangsposition, das heißt in der gebremsten Position, gezeigt. Die Federkraft des Betätigungssystems 34 bewirkt einen Anpressdruck auf das Lamellenpaket der Bremse 32. Die Kupplung 31 ist frei. Die Federkraft des Betätigungssystems 35 bewirkt einen Anpressdruck auf das Lamellenpaket der Hochhalteeinrichtung 33. Bei Beaufschlagung mit Druck wird der Kolben des Betätigungssystems 34 in der gezeigten Darstellung nach rechts verschoben und die Feder hierbei komprimiert. Hierdurch wird das Lamellenpaket der Bremse 32 freigegeben und ein Anpressdruck auf das Lamellenpaket der Kupplung 31 ausgeübt, so dass eingekuppelt wird. Parallel hierzu bewirkt der hydraulische Druck ein Verschieben des Kolbens des Betätigungssystems 35 in der gezeigten Darstellung nach links, so dass die Feder des Betätigungssystems 35 komprimiert wird und auch das Lamellenpaket der Hochhalteeinrichtung 33 freigegeben wird. Die Ansteuerung erfolgt über ein Pressensicherheitsventil 37. Zum Aufbau des hydraulischen Drucks ist eine Pumpe 38 vorgesehen. Darüber hinaus ist ein weiteres Ventil 39 vorgesehen, das in seiner Ausgangs-Schaltstellung gewissermaßen einen Kurzschluss der hydraulischen Leitung 36 bewirkt. Das Ventil 39 muss durch ein zusätzliches Ansteuersignal betätigt werden, um ein hydraulisches Ansteuern der Kupplungs-Bremskombination 30 zu ermöglichen. Das Ventil 39 realisiert somit eine weitere Sicherheitsstufe.

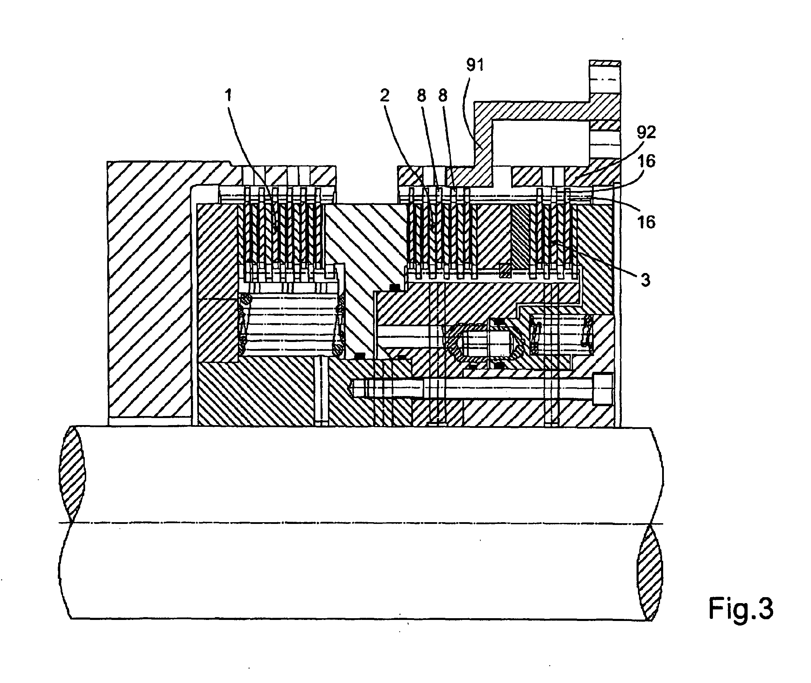

**Figur 3** illustriert ein weiteres bevorzugtes Ausführungsbeispiel einer Kupplungs-Bremskombination. Diese Ausführungsform ist vergleichbar mit der in Figur 1 gezeigten Kupplungs-Bremskombination und umfasst in entsprechender Weise eine Kupplung 1, eine Bremse 2 und eine Hochhalteeinrichtung 3. Mit Ausnahme des Trägers 9 entspricht die hier gezeigte Kupplungs-Bremskombination der in Figur 1 gezeigten Ausführungsform. Zur Vermeidung von Wiederholungen wird daher auf die Figur 1 verwiesen. Statt dem Träger 9 sind in dieser Ausführungsform sowohl der Bremse 2 als auch der Hochhalteeinrichtung 3 jeweils ein separates Außenteil 91 bzw. 92 zugeordnet. Das Außenteil bzw. der Träger 91 ist mit den äußeren Bremslamellen 8 der Bremse 2 verbunden. Das Außenteil bzw. der Träger 92 ist mit den äußeren Reibscheiben 16 der Hochhalteeinrichtung 3 verbunden. Sowohl die Bremse 2 als auch die Hochhalteeinrichtung 3 wird über die separaten Außenteile bzw. Außenzahnkränze 91 und 92 voneinander getrennt am Pressenlager bzw. Pressengehäuse abgestützt, so dass die Funktionssicherheit erhöht ist und bei einem möglichen Defekt eines der Teile 91 oder 92 das jeweils andere Teil im Sinne einer Redundanz die Sicherheit erhöhen kann.

## Patentansprüche

1. Verwendung einer zweiten Bremse mit Scheiben, die zum Reibschluss vorgesehen sind, als Hochhalteeinrichtung (3, 33) die in eine Kupplungs-Bremskombination mit wenigstens einer zur drehbeweglichen Verbindung mit einem Antrieb vorgesehenen Kupplung (1, 31) und mit wenigstens einer ortsfesten Bremse (2, 32) für eine Bearbeitungsmaschine integiert ist.

2. Verwendung nach Anspruch 1, **dadurch gekennzeichnet, dass** der Kupplung (1, 31) und der ortsfesten Bremse (2, 32) ein Betätigungssystem (34) und der Hochhalteeinrichtung (3, 33) ein weiteres Betätigungssystem (35) zugeordnet ist.

3. Verwendung nach Anspruch 2, **dadurch gekennzeichnet, dass** die Betätigungssysteme (34, 35) wenigstens einen Kolben (12, 18) und wenigstens eine Feder (15, 20) umfassen, wobei vorzugsweise die Betätigungssysteme (34, 35) hydraulisch ansteuerbar sind.

4. Verwendung nach Anspruch 2 oder Anspruch 3, **dadurch gekennzeichnet, dass** die Betätigungssysteme (34, 35) hydraulisch miteinander verbunden sind.

5. Verwendung nach einem der vorhergehenden Ansprüche, **dadurch gekennzeichnet, dass** zur Ansteuerung der Kupplungs-Bremskombination ein Sicherheitsventil (37) vorgesehen ist.

6. Verwendung nach Anspruch 5, **dadurch gekennzeichnet, dass** dem Sicherheitsventil (37) wenigstens ein weiteres Ventil (39) zugeordnet ist.

7. Verwendung nach einem der Ansprüche 3 bis 6, **dadurch gekennzeichnet, dass** dem Kolben (18) des Betätigungssystems der Hochhalteeinrichtung wenigstens ein Stift (22) zur Verdrehsicherung zugeordnet ist.

8. Verwendung nach einem der Ansprüche 3 bis 7, **dadurch gekennzeichnet, dass** für den Kolben (18) des Betätigungssystems der Hochhalteeinrichtung eine Stellungsüberwachung vorgesehen ist.

9. Verwendung nach einem der vorhergehenden Ansprüche, **dadurch gekennzeichnet, dass** für die Kupplung (1), die ortsfeste Bremse (2) und/oder die Hochhalteeinrichtung (3) eine Kühlung vorgesehen ist.

10. Verwendung nach einem der vorhergehenden Ansprüche, **dadurch gekennzeichnet, dass** der ortsfesten Bremse (2) und der Hochhalteeinrichtung (3) jeweils ein separates Außenteil (91, 92) zur Abstützung an einem Gehäuse zugeordnet ist.

## Claims

1. A use of a second brake with disks which are provided for frictional locking as a height-holding device (3, 33) which is integrated in a coupling brake combination with at least one coupling (1, 31) provided for rotatably movable connection with a drive and with at least one stationary brake (2, 32) for a machine tool.

2. A use according to claim 1, **characterized in that** the coupling (1, 31) and the stationary brake (2, 32) is associated with an actuating system (34) and the height-holding device (3, 33) is associated with a further actuating system (35).

3. A use according to claim 2, **characterized in that** the actuating systems (34, 35) comprise at least one piston (12, 18) and at least one spring (15, 20), with preferably the actuating systems (34, 35) being hydraulically triggerable.

4. A use according to claim 2 or claim 3, **characterized in that** the actuating systems (34, 35) are hydraulically connected with each other.

5. A use according to one of the preceding claims, **characterized in that** a safety valve (37) is provided for triggering the coupling/brake function.

6. A use according to claim 5, **characterized in that** the safety valve (37) is associated with at least one further valve (39).

7. A use according to one of the claims 3 to 6, **characterized in that** the piston (18) of the actuating system of the height-holding device is associated with at least one pin (22) for anti-twist protection.

8. A use according to one of the claims 3 to 7, **characterized in that** position monitoring is provided for the piston (18) of the actuating system of the height-holding device.

9. A use according to one of the preceding claims, **characterized in that** cooling is provided for the coupling (1), the stationary brake (2) and/or the height-holding device (3).

10. A use according to one of the preceding claims, **characterized in that** the stationary brake (2) and the height-holding device (3) are each associated with a separate outside part (91, 92) for support on a housing.

## Revendications

1. Utilisation d'un second frein à disques pour une liaison par friction comme installation de maintien en hauteur (3, 33) intégrée dans une combinaison embrayage-frein ayant au moins un embrayage (1, 31) prévu pour réaliser une liaison mobile en rotation avec un entraînement et au moins un frein fixe (2, 32) pour une machine de travail.

2. Utilisation selon la revendication 1,
**caractérisée en ce que**
l'embrayage (1, 31) et le frein fixe (2, 32) comportent un système d'actionnement (34) et l'installation de maintien en hauteur (3, 33) comporte un autre système d'actionnement (35).

3. Utilisation selon la revendication 2,
**caractérisée en ce que**
les systèmes d'actionnement (34, 35) comportent au moins un piston (12, 18) et au moins un ressort (15, 20),
* les systèmes d'actionnement (34, 35) étant commandés de préférence de manière hydraulique.

4. Utilisation selon la revendication 2 ou la revendication 3,
**caractérisée en ce que**
les systèmes d'actionnement (34, 35) sont reliés par une liaison hydraulique.

5. Utilisation selon l'une des revendications précédentes,
**caractérisée par**
une soupape de sécurité (37) pour commander la combinaison embrayage-frein.

6. Utilisation selon la revendication 5,
**caractérisée en ce qu'**
au moins une autre soupape (39) est associée à la soupape de sécurité (37).

7. Utilisation selon l'une des revendications 3 à 6,
**caractérisée en ce qu'**
au moins une broche (22) est associée au piston (18) du système d'actionnement de l'installation de maintien en hauteur pour assurer le blocage en rotation.

8. Utilisation selon l'une des revendications 3 à 7,
**caractérisée par**
une surveillance de position du piston (18) de l'installation d'actionnement de l'installation de maintien en hauteur.

9. Utilisation selon l'une des revendications précédentes,
**caractérisée par**
un moyen de refroidissement pour l'embrayage (1), le frein fixe (2) et/ou l'installation de maintien en hauteur (3).

10. Utilisation selon l'une des revendications précédentes,
**caractérisée en ce que**
le frein fixe (2) et l'installation de maintien en hauteur (3) comportent chacun une pièce extérieure séparée (91, 92) pour s'appuyer sur un boîtier.
